**Europäisches Patentamt**

**European Patent Office**

**Office européen des brevets**

(11) Veröffentlichungsnummer: **0 021 328**
**A1**

(19)

(12) # EUROPÄISCHE PATENTANMELDUNG

(21) Anmeldenummer: **80103375.4**

(22) Anmeldetag: **18.06.80**

(51) Int. Cl.³: **B 29 B 1/06,** B 29 D 27/02

(30) Priorität: **22.06.79 DE 2925173**
**22.06.79 DE 7917920 U**

(43) Veröffentlichungstag der Anmeldung: **07.01.81**
**Patentblatt 81/1**

(84) Benannte Vertragsstaaten: **AT BE CH DE FR GB IT LI LU NL SE**

(71) Anmelder: **Elastogran Maschinenbau GmbH & Co., Mitterstrassweg, D-8021 Strasslach vor München (DE)**

(72) Erfinder: **Kelterbaum, Manfred, Toelzer Strasse 8, D-8021 Strasslach (DE)**

(74) Vertreter: **Sand, Jakob, Dr., c/o BASF Aktiengesellschaft Carl-Bosch-Strasse 38, D-6700 Ludwigshafen (DE)**

(54) Verfahren und Vorrichtung zum Gegenstrom-Injektions-Mischen von mindestens zwei miteinander reagierenden, flüssigen Kunststoffkomponenten, insbesondere Polyurethan.

(57) Beim Mischen von mindestens zwei miteinander reagierenden flüssigen Kunststoffkomponenten werden die Komponenten für eine möglichst innige und plötzliche Vermischung unter hohem Druck und hoher Geschwindigkeit in eine Mischkammer (17) injiziert. Zwecks größerer Einflußmöglichkeit auf die Art der Mischung, d.h. zwecks Beeinflussung der Strahlausbreitung bzw. des Strahlvolumens und der Strahlenenergieverluste werden die Komponenten so geführt, daß sie unter einem Winkel, vorzugsweise einem veränderbaren Winkel, aufeinandertreffen. Hierzu, insbesondere aber zur Veränderung des Treffpunktes der Komponentenstrahlen, sind die Einspritzdüsen (9, 10) senkrecht zur Längsachse der Mischkammer verschiebbar bzw. schwenkbar oder auch in Richtung der Achse der Mischkammer sowie in ihrem Abstand zur Achse der Mischkammer verstellbar angeordnet.

0021328

Elastogran Maschinenbau GmbH + Co.     O.Z. 0192/02026
                                            02027

Verfahren und Vorrichtung zum Gegenstrom-Injektions-Mischen
von mindestens zwei miteinander reagierenden, flüssigen
Kunststoffkomponenten, insbesondere Polyurethan

---

Die Erfindung betrifft ein Verfahren und eine Vorrichtung
zum Gegenstrom-Injektions-Mischen von mindestens zwei miteinander reagierenden, flüssigen Kunststoffkomponenten,
insbesondere Polyurethan, in einer Mischkammer.

Es sind die unterschiedlichsten Verfahren und Vorrichtungen der eingangs genannten Art bekannt. Die Einspritzdüsen
sind hierbei so angeordnet, daß die aus ihnen austretenden
Strahlen senkrecht aufeinander treffen, um für eine möglichst innige und plötzliche Vermischung der mit hohem
Druck und hoher Geschwindigkeit aufeinandertreffenden
Kunststoffkomponenten zu sorgen. Wenn die bekannten Mischvorrichtungen einmal zusammengebaut sind, dann ist eine
nennenswerte Beeinflussung des Strahlenbildes und Verlaufes nicht mehr möglich. Grundsätzlich geht der Stand
der Technik davon aus, daß es für eine möglichst gute
Vermischung wichtig ist, daß die Strahlen der miteinander
zu verbindenden Komponenten möglichst senkrecht aufeinander treffen, d.h. wenn zwei Kunststoffkomponenten miteinander vermischt werden sollen, dann beträgt der Winkel
zwischen den Strahlen der eingespritzten Komponenten
$180^\circ$ (DT-PS 21 17 533).

Der Erfindung liegt nun die Aufgabe zugrunde, die Mischung
bei einem Verfahren und einer Vorrichtung der eingangs genannten Art noch zu verbessern und insbesondere eine größere Einflußmöglichkeit auf die Art der Mischung in der
Mischkammer zu ermöglichen.

Wr/BL

Diese Aufgabe wird grundsätzlich dadurch gelöst, daß die Strahlen der in die Mischkammer eintretenden Kunststoffkomponenten unter einem Winkel aufeinandertreffen, wobei der Treffpunkt der Komponentenstrahlen in der Mischkammer veränderbar ist. Hierdurch können insbesondere die Strahlenenergieverluste und die Strahlausbreitung bzw. das Strahlvolumen für eine optimale Vermischung der Komponenten beeinflußt werden. Eine weitere Verbesserung in diesem Sinne läßt sich dadurch erreichen, daß der Winkel, unter dem die Komponentenstrahlen aufeinandertreffen, veränderbar ist.

Die erfindungsgemäße Vorrichtung ist derart aufgebaut, daß die Einspritzdüsen derart in Bezug auf die Mischkammer angeordnet sind, daß ihre Strahlen unter einem Winkel in der Mischkammer aufeinandertreffen und daß die Einspritzdüsen zur Veränderung des Treffpunkts der Komponentenstrahlen in der Mischkammer verstellbar angeordnet sind.

Da nach dem Verfahren nach der Erfindung und in den entsprechenden Vorrichtungen Kunststoffe mit den unterschiedlichsten Eigenschaften zur Erzeugung der unterschiedlichsten Endprodukte gemischt und verarbeitet werden, ist es durch die Erfindung möglich, eine Anpassung an die Rezeptur der jeweils eingesetzten Kunststoffkomponenten vorzunehmen und damit auch die Eigenschaften und die Qualität des Endproduktes zu beeinflussen. Die Mischung kann so genau und gut eingestellt werden, daß häufig notwendige Nachmischorgane (Formteilangüsse) verkleinert oder ganz vermieden werden können. Der Vor- bzw. Nachlauf einer Komponente gegenüber der anderen, kann eingestellt bzw. verstellt werden. Dadurch, daß die Komponenten in einem Winkel, vorzugsweise unter einem Winkel von 70 bis 110°, in der Mischkammer aufeinandertreffen, und der eine Komponentenstrahl gegenüber dem anderen einen Vorlauf aufweisen kann, ist es möglich, in der Mischkammer, insbesondere wenn dieser einen kreisrunden Querschnitt aufweist, eine Wirbelbewegung zu erzeugen, die einen entsprechenden Einfluß auf die Mischung hat. Die Komponenten vermischen sich also nicht nur durch das plötzliche Aufeinandertreffen, sondern durch einen Art Rühreffekt, der durch ihre Strömung selbst erzeugt wird.

Weitere vorteilhafte Ausgestaltungen der Vorrichtung nach der Erfindung sind Gegenstand der Unteransprüche 3 bis 9.

Im folgenden wird die Erfindung unter Hinweis auf die Zeichnung anhand zweier Ausführungsbeispiele näher erläutert.

Es zeigt:

Fig. 1:     einen Querschnitt durch eine Ausführungsform
            einer Vorrichtung nach der Erfindung gemäß der
            Linie I-I der Figur 2;

Fig. 2:     einen Längsschnitt gemäß der Linie II-II der

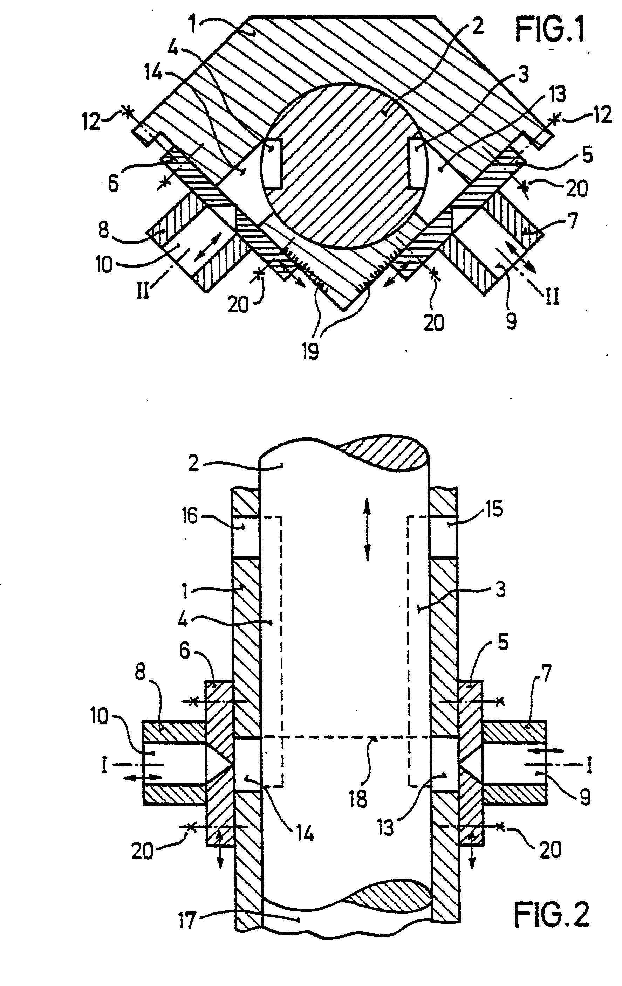

            Fig. 1; und

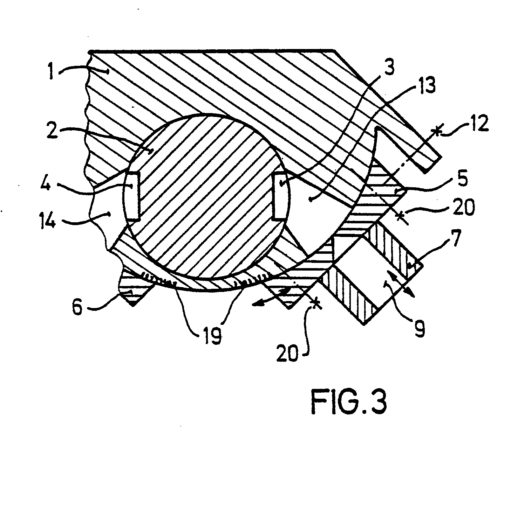

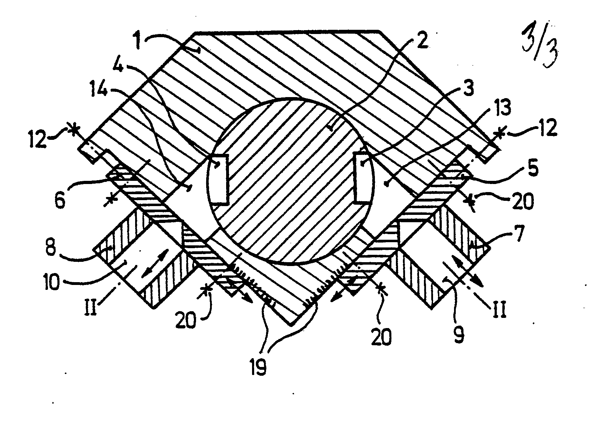

Fig. 3:     einen der Fig. 1 entsprechenden Querschnitt,
            jedoch durch eine andere Ausführungsform.

Elastogran Maschinen-       - 4 -        O.Z. 0192/02026
bau GmbH + Co.                                    02027

0021328

Die in der Zeichnung dargestellte Mischvorrichtung besteht aus einem Gehäuse 1, in der ein Steuerkolben 2 hin- und herbewegbar angeordnet ist. Der Steuerkolben 2 ist in seinem Querschnitt demjenigen der Mischkammer 17 angepaßt. In dem Steuerkolben 2 sind zwei Rücklaufnuten 3 und 4 vorgesehen. Zu der Mischkammer führen Eintrittsöffnungen 13 und 14. Die Austrittsöffnung ist in Fig. 2 abgeschnitten, sie liegt noch weiter unterhalb der Eintrittsöffnungen 13 und 14.

Die Einspritzdüsen 9 und 10 für die miteinander zu vermischenden Kunststoffkomponenten sind in Düsenhaltern 7 und 8 angeordnet, die wiederum auf Platten 5 und 6 befestigt sind.

Die Platten 5 und 6 sind bei der Ausführungsform nach Fig. 1 und 2 senkrecht zur Längsachse der Mischkammer verschiebbar. Dieses ist durch Doppelpfeile angedeutet. Befestigt sind die Platten 5 und 6 durch Schrauben 20 in Langlöchern, die die Verschiebbarkeit ermöglichen. Die Verschiebung selbst wird durch Verstellschrauben 12 durchgeführt, die in entsprechenden Vorsprüngen des Gehäuses 1 gelagert sind. Wenn die gewünschte Stellung erreicht ist, werden die Schrauben 20 gesichert, damit diese Stellung nicht mehr verändert werden kann. Die Schrauben sind durch strichpunktierte Linien lediglich angedeutet.

Wie ebenfalls durch Doppelpfeile angedeutet, sind die Düsen 9 und 10 in ihrem Abstand zur Längsachse der Mischkammer ebenfalls verstellbar.

Ggf. ist es auch möglich, die Platten 5 und 6 in Richtung der Längsachse der Mischkammer 17 zu verstellen, wie durch Doppelpfeile in Fig. 2 angedeutet.

Wie die Verstellung konstruktiv durchgeführt wird, ist für den Fachmann auf dem Gebiet des Maschinenbaus eine Maßnahme, die für ihn selbstverständlich ist und den jeweiligen konstruktiven Möglichkeiten angepaßt werden kann.

Skalen 19 ermöglichen die Wiederherstellung einer einmal als günstig erkannten Einstellung bzw. das Erkennen einer vorgenommenen Verstellung.

Bei der Ausführungsform nach Fig. 3 sind die Platten 5 und 6 nicht verschiebbar, sondern schwenkbar. Das Gehäuse ist daher ebenfalls wie die entsprechende Oberfläche der Platten 5 und 6 kreisrund. Auch hier sind Skalen 19 vorgesehen. Die Schrauben 12 und 20 zur Durchführung der Verstellung und zur Arretierung sind wiederum durch strichpunktierte Linien angedeutet. Doppelpfeile zeigen die Art der Verstellung.

Die Einspritzdüsen sind in der unterschiedlichsten Weise verstellbar, verschiebbar und/oder schwenkbar, so daß die Strahlen auch asymmetrisch innerhalb der Mischkammer aufeinandertreffen können.

In Fig. 2 ist der Steuerkolben 2 in Schließ- oder Rücklaufstellung dargestellt. Wenn in dieser Stellung Kunststoffkomponenten von nicht gezeigten Vorratsbehältern durch die Düsen 9 und 10 gefördert werden, strömen die Komponentenströme durch die Eintrittsöffnungen 13 bzw. 14 in die Rücklaufnuten 3 bzw. 4 und durch Austrittsöffnungen 15 und 16 zurück in den jeweiligen Lagertank. Wenn nun eine Mischung durchgeführt werden soll, wird der Steuerkolben 2 aus dem Bereich der Eintrittsöffnungen 18 herausbewegt, so daß die Strahlen der Kunststoffkomponenten in die Mischkammer eintreten, dort je nach

Einstellung der Einspritzdüsen aufeinandertreffen und sich miteinander vermischen. Der Austritt des Gemisches erfolgt dann aus der nicht gezeigten Austrittsöffnung beispielsweise in eine Form. Dadurch, daß die Strahlen nicht in einem Winkel von 180° aufeinandertreffen, entsteht in der Kammer eine starke Wirbelbewegung, die einen entsprechenden Einfluß auf die Mischung hat. Beispielsweise kann eine Einspritzdüse anders angeordnet werden als die andere, so daß sich die Strahlen nicht auf einer Symmetrielinie der Mischkammer treffen. Hierdurch läuft eine Komponente vor und die andere nach. Dieses hat Einfluß auf die Mischung, d.h. auf das erzeugte Endprodukt. Beispielsweise durch einfache Vorversuche mit den zu verarbeitenden Kunststoffkomponenten kann herausgefunden werden, welche Einstellung der Einspritzdüsen am günstigsten und ökonomischsten ist. Diese Einstellung kann dann festgehalten werden. Sie bleibt solange unverändert, bis andere Kunststoffkomponenten verarbeitet und andere Endprodukte hergestellt werden sollen. Wenn dann zu einem späteren Zeitpunkt Kunststoffkomponenten mit bekannten Eigenschaften und in bekannten Rezepturen verarbeitet werden sollen, so ist es mit Hilfe der Skalen möglich, die einmal als richtig erkannte Einstellung von vorneherein vorzunehmen.

Insbesondere in Abweichung von dem in Fig. 1 und 3 gezeigten symmetrischen Strahlenverlauf, ist es möglich, die Strahlen außerhalb einer Symmetrielinie aufeinandertreffen zu lassen. Der eine Strahl legt dann einen längeren Weg zurück, bis er auf den anderen trifft. Hierdurch wird die Entstehung einer Wirbelbewegung in der Mischkammer unterstützt.

Die Mischkammer kann auch andere Querschnittsformen aufweisen, die von derjenigen der Kreisform abweicht.

## Patentansprüche

1.  Verfahren zum Gegenstrom-Injektions-Mischen von mindestens zwei miteinander reagierenden, flüssigen Kunststoffkomponenten, insbesondere Polyurethan, in einer Mischkammer, dadurch gekennzeichnet, daß die Strahlen der in die Mischkammer eintretenden Kunststoffkomponenten unter einem Winkel aufeinandertreffen, wobei der Treffpunkt der Komponentenstrahlen in der Mischkammer veränderbar ist.

2.  Verfahren nach Anspruch 1, dadurch gekennzeichnet, daß der Winkel, unter dem die Komponentenstrahlen aufeinandertreffen veränderbar ist.

3.  Vorrichtung zur Durchführung des Verfahrens nach Anspruch 1 und/oder 2, mit einer Mischkammer, die Eintrittsöffnungen für die einzelnen Komponenten und eine Austrittsöffnung für das Komponentengemisch besitzt, wobei in jeder Eintrittsöffnung eine Einspritzdüse angeordnet ist, dadurch gekennzeichnet, daß die Einspritzdüsen (9, 10) derart in Bezug auf die Mischkammer (17) angeordnet sind, daß ihre Strahlen unter einem Winkel in der Mischkammer aufeinandertreffen und daß die Einspritzdüsen zur Veränderung des Treffpunkts der Komponentenstrahlen in der Mischkammer verstellbar angeordnet sind.

4.  Vorrichtung nach Anspruch 3, dadurch gekennzeichnet, daß die Einspritzdüsen (9, 10) senkrecht zur Längsachse der Mischkammer (17) verschiebbar angeordnet sind.

5.  Vorrichtung nach Anspruch 3, <u>dadurch gekennzeichnet,</u>
daß die Einspritzdüsen (9, 10) senkrecht zur Längsachse der Mischkammer (17) schwenkbar angeordnet
sind.

6.  Vorrichtung nach Anspruch 3, 4 oder 5, <u>dadurch ge-</u>
<u>kennzeichnet,</u> daß die Einspritzdüsen (9, 10) in ihrem Abstand zur Achse der Mischkammer (17) verstellbar angeordnet sind.

7.  Vorrichtung nach einem oder mehreren der vorstehenden Ansprüche 3 bis 6, <u>dadurch gekennzeichnet,</u> daß
die Einspritzdüsen (9, 10) in Richtung der Achse
der Mischkammer (17) verstellbar angeordnet sind.

8.  Vorrichtung nach einem oder mehreren der vorstehend
genannten Ansprüche 3 bis 7, <u>dadurch gekennzeichnet,</u>
daß die Mischkammer (17) einen gleichmäßigen Querschnitt aufweist und daß in der Mischkammer ein diesem Querschnitt angepaßter Steuerkolben angeordnet
ist, der aus einer die Eintrittsöffnungen offenlassenden Stellung bis in den Bereich der Austrittsöffnung, dabei die Eintrittsöffnungen gegenüber der
Mischkammer absperrend, hin- und herbewegbar ist.

9.  Vorrichtung nach einem oder mehreren der vorstehenden Ansprüche 3 bis 8, <u>dadurch gekennzeichnet,</u> daß
die Mischkammer einen kreisförmigen Querschnitt aufweist.

Zeichn.

0021328

FIG.1

1/3

FIG.2

FIG.3

**Europäisches Patentamt**

# EUROPÄISCHER RECHERCHENBERICHT

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | DE - B - 1 779 037 (FARBENFABRIKEN BAYER AG) * Spalte 2, Zeilen 23 bis 46 * -- | 1-3, 5 | B 29 B 1/06 B 29 D 27/02 |
| D | DE - C3 - 2 117 533 (KRAUSS-MAFFEI AG) * Fig. 2, 3 * -- | 8,9 | |
| A | DE - U - 7 047 142 (DEUTSCHE SEMPERIT GUMMIWERK GMBH) * Seite 3, Absatz 4 * -- | | RECHERCHIERTE SACHGEBIETE (Int. Cl.3) |
| A | DE - A1 - 2 346 347 (DEMAG KUNSTSTOFF-TECHNIK GMBH) * Anspruch 1 * -- | | B 29 B 1/06 B 29 D 27/02 |
| A | DE - B - 2 145 547 (H. CLASEN) * Fig. 3, 4 * -- | | |
| A | DE - A1 - 2 348 608 (BAYER AG) * Seite 8, Zeilen 18 bis 24 * ---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 29-08-1980 | BITTNER |

EPA form 1503.1  06.78